# EUROPÄISCHE PATENTANMELDUNG

(11) **EP 4 763 761 A1**
(43) Veröffentlichungstag der Anmeldung: **24.06.2026**
(21) Anmeldenummer: 24221903.8
(22) Anmeldetag: 19.12.2024
(51) Int. Cl.: B65G 51/24, B65G 51/32, B23P 19/00

(54) **VERFAHREN ZUM FÜHREN VON BAUELEMENTEN ZU WENIGSTENS EINER ZIELPOSITION SOWIE VORRICHTUNG ZUM DURCHFÜHREN EINES SOLCHEN VERFAHRENS**

(71) Anmelder: Stöger Automation GmbH, 82549 Königsdorf (DE)
(72) Erfinder: Fischhaber, Thomas, 83674 Gaißach (DE); Raab, Alexander, 82538 Geretsried (DE)
(74) Vertreter: Paustian & Partner Patentanwälte mbB

(57) **Zusammenfassung**

Die Erfindung betrifft ein Verfahren sowie eine Vorrichtung zum Führen von Bauelementen (11), insbesondere Fügeelementen zu wenigstens einer Zielposition. Dabei werden wenigstens zwei Führungskanäle (25, 26) mit einem konstanten Luftstrom durchströmt. Die Bauelemente (11) werden mittel einer Bauelementzuführung (14) einer Aufnahmekammer (15, 16) zugeführt und vom Luftstrom zu der wenigstens einen Zielposition (21, 22) geführt.

## Beschreibung

Die Erfindung betrifft ein Verfahren und eine Vorrichtung zum Führen von Bauelementen, insbesondere Fügeelementen zu wenigstens einer Zielposition mittels eines konstanten Luftstroms.

Bei der automatisierten Montage von Zusammenbauten, insbesondere bei Verfahren mit hohen Taktzeiten werden mehrfach verwendete Bauelemente wie Fügeelemente häufig mittels Fördervorrichtungen aus einem Vorratsbehälter geleitet und je nach Ausführung bereits vereinzelt in den Montageprozess geführt. Damit die Bauelemente an die vorgesehene Montageposition gelangen, weisen die Fördereinrichtungen häufig integrierte oder an diesen angeordnete Vorrichtungen wie beispielsweise Weichen zum Zuordnen von Bauelementen zu meist mehreren Zielpositionen auf. Zum Führen der Bauelemente werden dabei beispielsweise Shuttleeinrichtungen eingesetzt, welche die Bauelemente meist einzeln formschlüssig aufnehmen, weshalb solche Vorrichtungen häufig aufwändig gestaltet sind. Bei anderen Ausführungen werden die Bauelemente mittels pneumatischer Systeme zu einer Zielposition geführt, welche eine Anbindung an ein Druckluftversorgungsystem erfordern und insbesondere bei häufigen Schaltvorgängen einen teilweise sehr hohen Lärmpegel verursachen. Nachteilig an den bekannten Verfahren ist außerdem eine oftmals geringe Transportgeschwindigkeit der Bauelemente und/ oder eine Verzögerung des Transports aufgrund von Ventilschaltzeiten.

Hiervon ausgehend liegt der Erfindung die Aufgabe zugrunde, ein verbessertes Verfahren zum Führen von Bauelementen zu wenigstens einer Zielposition sowie eine verbesserte Vorrichtung zum Führen von Bauelementen zu wenigstens einer Zielposition zur Verfügung zu stellen.

Dies wird erfindungsgemäß durch die Lehre der unabhängigen Ansprüche erreicht. Zu bevorzugende Weiterbildungen der Erfindung sind Gegenstand der Unteransprüche.

Zur Lösung der Aufgabe wird in einem ersten Aspekt ein Verfahren zum Führen von Bauelementen, insbesondere Fügeelementen zu wenigstens einer Zielposition vorgeschlagen, welches die folgenden Schritte aufweist:
a) Durchströmen von wenigstens zwei Führungskanälen mit einem konstanten Luftstrom zum Führen von Bauelementen mit dem konstanten Luftstrom zu der wenigstens einen Zielposition;
b) Zuführen eines Bauelements zu einer Aufnahmekammer; und
c) Bewegen des Bauelements in der Aufnahmekammer an eine Aufnahmeposition eines der Führungskanäle, an welcher der Luftstrom das Bauelement aufnimmt und zu der wenigstens einen Zielposition führt.

Bei dem vorgeschlagenen Verfahren werden Bauelemente insbesondere bei Montageverfahren zu wenigstens einer Zielposition geführt. Das Verfahren eignet sich dabei zum Führen von Bauelementen, insbesondere von Fügeelementen, die beispielsweise zum Fügen mit und/ oder von Bauteilen verwendet werden, wie Schrauben, Muttern, Niete, Stifte, Scheiben, Ringe, Nägel, Bolzen, Passfedern oder Buchsen, oder auch zum Führen insbesondere kleinerer Bauelemente, die nicht genormt sind und an anderen Bauteilen angeordnet, insbesondere mit diesen gefügt werden können. Eine Zielposition ist dabei eine Position, an welcher das geführte Bauelement beispielsweise weiter in seine im Zusammenbau vorbestimmte Position gebracht oder von einer weiteren Einrichtung insbesondere zur weiteren Positionierung aufgenommen wird.

Das Verfahren wirkt mit wenigstens zwei mit einem konstanten Luftstrom durchströmbaren Führungskanälen und einer Aufnahmekammer zusammen, in welcher wenigstens ein Bauelement an eine Aufnahmeposition der Führungskanäle führbar ist.

In einem Schritt a) des Verfahrens werden wenigstens zwei Führungskanäle mit einem konstanten Luftstrom durchströmt, welcher die Bauelemente zu der wenigstens einen Zielposition führt. Bei einer Versorgung der Führungskanäle mit einem konstanten Luftstrom entstehen einerseits zumindest während des Verfahrensablaufs keine lärmverursachenden Druckimpulse, andererseits steht jederzeit ein zur Führung der Bauelemente erforderlicher Luftstrom an. Um die Bauelemente zu der wenigstens einen Zielposition zu führen, ist der Luftstrom konstant zur Zielposition gerichtet. Insbesondere wird der Luftstrom über die Zielposition hinaus geführt, um ein sicheres Erreichen der Zielposition durch das Bauelement zu ermöglichen.

In einem Schritt b) des Verfahrens wird ein insbesondere einzelnes Bauelement zu einer Aufnahmekammer geführt, in welcher dieses aufgenommen wird. Die Aufnahmekammer ist dabei insbesondere ausgebildet bzw. vorgesehen, dass darin ein Bauelement aufnehmbar ist und/ oder darin bzw. damit an eine andere Position bewegbar ist. Dabei kann das Bauelement beispielsweise auch zweiteilig ausgeführt sein, oder bei besonderen Ausführungsformen kann mittels dem vorgeschlagenen Verfahren auch jeweils eine Bauelementgruppe zu einer Zielposition geführt werden, welche im Zusammenhang mit der Beschreibung der Erfindung auch als "Bauelement" verstanden wird.

In einem Schritt c) des Verfahrens wird das Bauelement in der Aufnahmekammer an eine Aufnahmeposition eines der Führungskanäle bewegt. Die Auswahl desjenigen Führungskanals, an dessen Aufnahmeposition das Bauelement geführt wird, ist dabei insbesondere steuerbar und kann abhängig von äußeren Einflüssen beispielsweise aus dem Montageverfahren variieren oder voreingestellt nach einem vorbestimmten Ablauf erfolgen.

Dabei kann die Aufnahmekammer oder wenigstens ein Teil dieser oder deren Wandung(en) mit dem Bauelement an eine Aufnahmeposition bewegt werden und/ oder die Aufnahmekammer kann zumindest teilweise unbeweglich bzw. stationär ausgeführt sein. Das darin aufgenommene Bauelement kann insbesondere mechanisch, pneumatisch und/ oder mithilfe der Schwerkraft an eine Aufnahmeposition bewegt werden. Die Aufnahmeposition des Führungskanals wirkt dabei so mit der Aufnahmekammer bzw. einer Funktion der Aufnahmekammer zusammen, dass das Bauelement vom konstanten Luftstrom im Führungskanal erfasst und zur Zielposition geführt werden kann. Entsprechend durchströmt der konstante Luftstrom den Führungskanal insbesondere bereits während das Bauelement an dessen Aufnahmeposition bewegt wird. Insbesondere wirkt die Aufnahmeposition des Führungskanals und/ oder der Führungskanal bzw. der darin strömende Luftstrom so mit der Aufnahmekammer zusammen, dass der Luftstrom zur Aufnahme des Bauelementes nicht unterbrochen bzw. nicht wesentlich eingeschränkt wird, sondern die wenigstens zwei Führungskanäle kontinuierlich durchströmt.

Bei einer Ausführungsform des Verfahrens wird in einem weiteren Schritt d) eine korrekte Aufnahme des Bauelements im Luftstrom des Führungskanals erfasst. Eine korrekte Aufnahme kann beispielsweise mittels eines Sensors erfasst werden, welcher beispielsweise im jeweiligen Führungskanal angeordnet ist und das Bauelement im Führungskanal erfasst. Alternativ oder zusätzlich kann ein Sensor in der Aufnahmekammer angeordnet sein, welcher beispielsweise zunächst das Vorhandensein eines Bauelements in der Aufnahmekammer erfassen kann und nach der Aufnahme des Bauelements im Führungskanal dessen Fehlen erkennt bzw. erfassen kann. Insbesondere kann mittels eines stromabwärts im Führungskanal angeordneten Sensors eine korrekte Aufnahme und/ oder Führung des Bauelements durch den Luftstrom im Führungskanal erfasst werden.

Bei einer Ausführungsform des Verfahrens wird nach dem Erfassen einer korrekten Aufnahme des Bauelements im Luftstrom des Führungskanals im Schritt d) ein weiteres insbesondere einzelnes Bauelement gemäß Schritt b) der Aufnahmekammer zugeführt. Durch das Erfassen der korrekten Aufnahme des Bauelements im Luftstrom ist sichergestellt, dass sich das Bauelement nicht mehr in der Aufnahmekammer befindet, so dass diese zurück in eine Aufnahmeposition geführt werden kann und/ oder dieser bzw. abhängig von der Ausführung einer weiteren Aufnahmekammer ein weiteres Bauelement zugeführt werden kann, um an eine Aufnahmeposition eines der Führungskanäle geführt zu werden. Auf diese Weise wird durch das Erfassen der korrekten Aufnahme des Bauelements im Luftstrom eine Verzögerung beim Zuführen eines weiteren bzw. des nächsten Bauelements in eine Aufnahmekammer vermieden und somit eine kurze Taktzeit des Verfahrens ermöglicht.

Bei einer Ausführungsform des Verfahrens wird die Aufnahmekammer beim Bewegen des Bauelements an eine Aufnahmeposition eines der Führungskanäle im Schritt c) gegenüber einer Bauelementzuführung versperrt. Abhängig von der Ausführung von Führungskanal und Aufnahmekammer wird hierdurch einerseits eine Zuführung eines (weiteren) Bauelements verhindert, insbesondere solange das in der Aufnahmekammer aufgenommene Bauelement noch nicht im Luftstrom des Führungskanals aufgenommen ist. Andererseits kann durch ein Versperren der Aufnahmekammer gegenüber einer Bauelementzuführung auch ein unerwünschtes Einströmen des Luftstroms in die Bauelementzuführung verhindert werden.

Bei einer Ausführungsform des Verfahrens wird der konstante Luftstrom von wenigstens zwei Luftstromquellen erzeugt und der von einer Luftstromquelle erzeugte Luftstrom durchströmt jeweils wenigstens einen Führungskanal und/ oder der von einer Luftstromquelle einheitlich erzeugte konstante Luftstrom wird auf wenigstens zwei Führungskanäle aufgeteilt. Eine einheitliche Erzeugung und Aufteilung des Luftstroms einer Luftstromquelle kann bei einer insbesondere geometrisch vergleichbaren Führung des Bauelements zur jeweiligen Zielposition insbesondere energetisch günstig sein. Bei einer unterschiedlichen Führung der Bauelemente in den jeweiligen Führungskanälen, beispielsweise bei verschiedenen Streckenlängen oder Verläufen (Krümmungen, Verengungen etc.) der Führungskanäle sind für eine zuverlässige Führung der Bauelemente zur jeweiligen Zielposition unterschiedliche Luftvolumenströme in den Führungskanälen vorteilhaft, die insbesondere von verschiedenen Luftstromquellen erzeugt sein können. Dies trifft auch bei der Verwendung des Verfahrens für verschiedene Bauelemente zu, für deren Führung verschiedene Volumenströme vorteilhaft sind.

Bei einer Ausführungsform des Verfahrens wird die Aufnahmekammer während dem Zuführen eines Bauelements in die Aufnahmekammer im Schritt b) gegenüber wenigstens einem Führungskanal bzw. der Aufnahmeposition des wenigstens einen Führungskanals versperrt. Auf diese Weise kann bei der Zuführung des Bauelements zur Aufnahmekammer abhängig von der Ausführung verhindert werden, dass das Bauelement unmittelbar und insbesondere unerwünscht bereits während bzw. unmittelbar nach dem Zuführen in die Aufnahmekammer an eine Aufnahmeposition eines der Führungskanäle gelangt.

Bei einer Ausführungsform des Verfahrens wird das Zuführen eines Bauelements zu einer vorbestimmten Aufnahmekammer und/ oder das Bewegen des Bauelements insbesondere in einer Aufnahmekammer an eine Aufnahmeposition eines der Führungskanäle gesteuert. Auf diese Weise kann einerseits ein Ablauf gesteuert werden, wonach in welcher Reihenfolge und/ oder zu welcher Zeit Bauelemente welchem Führungskanal zugeführt werden, um zu jeweils vorbestimmten Zielpositionen zu gelangen. Insbesondere kann bei einem Verfahren mit verschiedenen Bauelementen auch eine Zuführung verschiedener Bauelemente zu jeweils vorbestimmten Führungskanälen und damit Zielpositionen gesteuert werden.

In einem zweiten Aspekt der Erfindung wird eine Vorrichtung zum Führen von Bauelementen, insbesondere Fügeelementen zu wenigstens einer Zielposition vorgeschlagen. Die Vorrichtung weist dabei auf:
- wenigstens eine Luftstromquelle zum Versorgen der Vorrichtung mit einem konstanten Luftstrom;
- wenigstens zwei von dem Luftstrom durchströmbare Führungskanäle zum Führen von Bauelementen zu der wenigstens einen Zielposition;
- eine Bauelementzuführung zum Zuführen jeweils eines Bauelements in eine Aufnahmekammer; und
- die wenigstens eine Aufnahmekammer, in welcher die Bauelemente einzeln aufnehmbar sind und an eine Aufnahmeposition eines der Führungskanäle bewegbar sind, an welcher die Bauelemente vom Luftstrom aufnehmbar und zur jeweiligen Zielposition führbar sind.

Die Vorrichtung ist dabei insbesondere zur Durchführung des vorausgehend beschriebenen Verfahrens ausgeführt, so dass die einzelnen Vorrichtungsteile so gestaltet sind, dass diese zur Ausführung der vorausgehend beschriebenen Verfahrensschritte geeignet ist. Merkmale und Eigenschaften von Teilen der Vorrichtung, die sich aus der Beschreibung des Verfahrens ergeben, betreffen somit auch die hier beschriebene Vorrichtung.

Die Vorrichtung zum Führen von Bauelementen weist eine Bauelementzuführung zum Zuführen jeweils eines Bauelements in eine Aufnahmekammer auf. Abhängig von der Verwendung der Vorrichtung kann vorgesehen sein, dass der Aufnahmekammer mittels der Bauelementzuführung ein einzelnes einstückig ausgebildetes Bauelement und/ oder ein einzelnes mehrteiliges Bauelement zugeführt wird. Die Bestandteile eines solchen mehrteiligen Bauelements sind dabei insbesondere unverlierbar miteinander verbunden, so dass diese eine vereinzelbare Einheit bilden. Insbesondere kann die Bauelementzuführung ausgebildet sein, dass dieser selbst eine Vielzahl von Bauelementen zuführbar ist, die Bauelementzuführung diese allerdings vereinzelt, also jeweils nur ein Bauelement an die Aufnahmekammer abgibt.

Bei einer Ausführungsform ist die Vorrichtung an ein Druckluftversorgungssystem als Luftstromquelle anschließbar oder weist wenigstens einen Volumenstromerzeuger als Luftstromquelle auf. Bei Verfügbarkeit eines Druckluftversorgungssystems ist die Gestaltung und die Anschlussstruktur der Führungskanäle an den aus dem Druckluftversorgungssystem verfügbaren Druck- und Volumenstrom angepasst. Insbesondere ist ein konstantes Durchströmen der Führungskanäle mit einem Luftstrom zur Aufnahme und Führung eines Bauelements zu einer Zielposition zu gewährleisten. Zusätzlich oder alternativ weist die Vorrichtung selbst einen Volumenstromerzeuger als Luftstromquelle auf. Ein solcher Volumenstromerzeuger kann beispielsweise als Miniatur-Radialgebläse oder als Seitenkanalverdichter ausgebildet sein, wobei ein Miniatur-Radialgebläse aufgrund seines guten Wirkungsgrads vorteilhaft für die Verwendung bei der vorgeschlagenen Vorrichtung ist. Insbesondere kann die Vorrichtung auch mit einem separaten Volumenstromerzeuger verbindbar sein, welcher dann im Rahmen der Erfindung auch als ein Druckluftversorgungssystem zur Verfügung stellend betrachtet werden kann.

Bei einer Ausführungsform der Vorrichtung weist jeder Führungskanal eine eigene Luftstromquelle auf oder wenigstens zwei Führungskanäle weisen eine gemeinsame Luftstromquelle auf. Die Gestaltung der Druckluftversorgung der einzelnen Führungskanäle erfolgt dabei ausgehend von den erforderlichen Druck- und Volumenströmen der einzelnen Führungskanäle, insbesondere um eine konstante Durchströmung dieser zur Aufnahme und Führung eines Bauelements zu einer Zielposition zu gewährleisten.

Bei einer Ausführungsform der Vorrichtung ist in den wenigstens zwei Führungskanälen im Luftstrom nach der Aufnahmeposition jeweils ein Sensor zum Erfassen eines vom Luftstrom weggeführten Bauelements angeordnet. Dabei wird eine korrekte Aufnahme des Bauelements im Luftstrom des Führungskanals erfasst. Das Signal kann insbesondere als zeitliches Signal im Funktionsablauf der Vorrichtung dienen. Zusätzlich kann ein Sensor in der Aufnahmekammer angeordnet sein, welcher beispielsweise zunächst das Vorhandensein eines Bauelements in der Aufnahmekammer erfassen kann und nach der Aufnahme des Bauelements im Führungskanal dessen Fehlen erkennt bzw. erfassen kann. Insbesondere kann mittels eines stromabwärts der Aufnahmeposition im Führungskanal angeordneten Sensors eine korrekte Aufnahme und/ oder Führung des Bauelements durch den Luftstrom im Führungskanal erfasst werden.

Bei einer Ausführungsform der Vorrichtung wird wenigstens eine Wandung der Aufnahmekammer von einem beweglichen Wandungselement gebildet, durch dessen Bewegung das Bauelement an wenigstens eine Aufnahmeposition eines der Führungskanäle bewegbar ist. Abhängig von der Ausführung kann die Aufnahmekammer aus stationär und beweglich ausgeführten Wandungselementen gebildet sein, wobei wenigstens ein beweglich angeordnetes Wandungselement insbesondere zum Bewegen eines sich in der Aufnahmekammer befindenden Bauelements an eine Aufnahmeposition eines der Führungskanäle vorgesehen ist.

Bei einer Ausführungsform der Vorrichtung weist diese ein Sperrelement zum Versperren der Aufnahmekammer gegenüber der Bauelementzuführung auf. Insbesondere ist wenigstens ein bewegliches Wandungselement ausgebildet, während der Bewegung des Bauelements an eine Aufnahmeposition eines der Führungskanäle die Bauelementzuführung zum Zuführen jeweils eines Bauelements in die Aufnahmekammer zu sperren. Eine solche Gestaltung dient insbesondere zum Vermeiden einer Fehlzuführung eines Bauelements während sich in der wenigstens einen Aufnahmekammer bereits bzw. noch ein Bauelement befindet oder die Aufnahmekammer nicht zur Aufnahme eines Bauelements bereit ist.

Bei einer Ausführungsform der Vorrichtung ist das wenigstens eine bewegliche Wandungselement insbesondere mittels einer Antriebseinrichtung rotatorisch oder translatorisch bewegbar, insbesondere um ein Bauelement zu einer Aufnahmeposition wenigstens eines Führungskanals zu führen. Dabei kann die Aufnahmekammer insbesondere in Form eines translatorisch bewegbaren Shuttles ausgeführt sein, welches wenigstens zwischen wenigstens zwei Positionen, einer Zuführposition und wenigstens einer Aufnahmeposition bewegbar ist. Alternativ kann die Aufnahmekammer auch als Ausnehmung in einem rotierbaren Drehteller ausgebildet sein, welcher zwischen einer Zuführposition und wenigstens einer Aufnahmeposition in wenigsten einer vorbestimmten Winkelposition des Drehtellers bewegbar ist.

Bei einer Ausführungsform der Vorrichtung weist diese eine Steuereinrichtung auf oder ist mit einer solchen verbunden, welche insbesondere auch mit einem Sensor zum Erfassen eines vom Luftstrom weggeführten Bauelements verbunden ist. Die Steuereinrichtung steuert dabei die Abläufe der Vorrichtung,

insbesondere die Zuführung eines Bauelements in eine Aufnahmekammer und die Bewegung der Aufnahmekammer bzw. wenigstens eines beweglichen Wandungselements der Aufnahmekammer insbesondere mittels einer geeigneten Antriebseinrichtung und damit die Bewegung des Bauelements an eine Aufnahmeposition eines der Führungskanäle.

Weitere Vorteile, Merkmale und Anwendungsmöglichkeiten der vorliegenden Erfindung ergeben sich aus der nachfolgenden Beschreibung in Zusammenhang mit den Figuren. Es zeigt:
- Fig. 1a: eine schematische Schnittdarstellung einer beispielhaften Vorrichtung zum Führen von Bauelementen zu wenigstens einer Zielposition;
- Fig. 1b: eine schematische Schnittdarstellung von oben der beispielhaften Vorrichtung zum Führen von Bauelementen aus Fig. 1a;
- Fig. 2: eine schematische Schnittdarstellung einer weiteren beispielhaften Vorrichtung zum Führen von Bauelementen zu wenigstens einer Zielposition;
- Fig. 3: eine schematische Schnittdarstellung einer weiteren beispielhaften Vorrichtung zum Führen von Bauelementen zu wenigstens einer Zielposition;
- Figs. 4a bis 4e: schematische Schnittdarstellungen der beispielhaften Vorrichtung aus Fig. 3 zu verschiedenen Zeitpunkten beim Führen von Bauelementen zu einer Zielposition; und
- Figs. 5a bis 5d: schematische Schnittdarstellungen einer weiteren beispielhaften Vorrichtung zu verschiedenen Zeitpunkten beim Führen von Bauelementen zu einer Zielposition.

In allen Figuren werden für gleiche bzw. gleichartige Bauteile übereinstimmende Bezugszeichen verwendet.

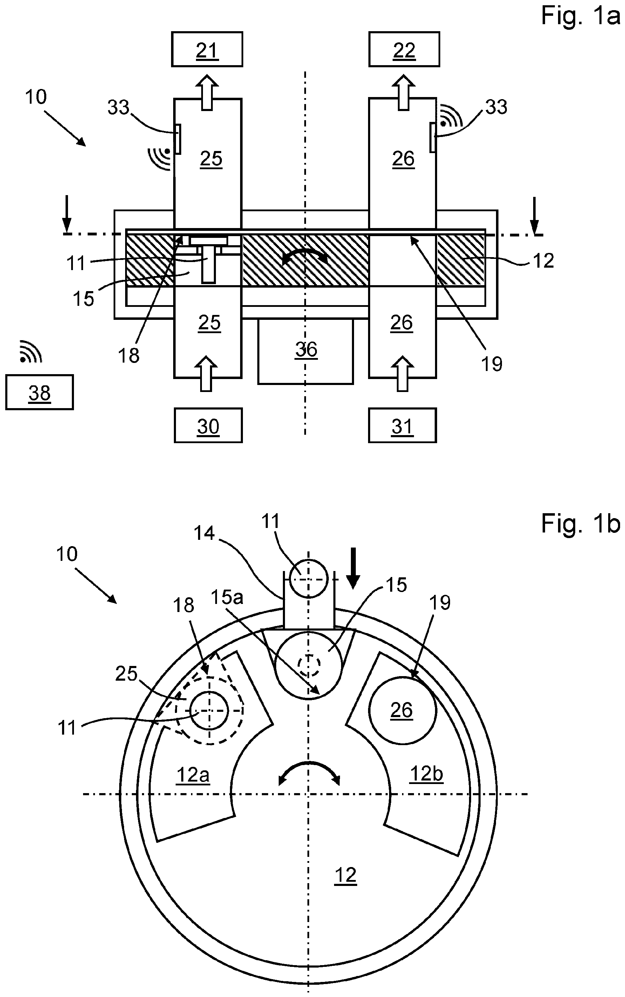

Die **Figuren 1a** und **1b** zeigen schematische Schnittdarstellungen einer beispielhaften Vorrichtung 10 zum Führen von Bauelementen 11 zu wenigstens einer Zielposition 21, 22. Die Darstellung in Fig. 1b zeigt einen Schnitt durch die in Fig. 1a angegebene Schnittebene.

Die in Fig. 1 dargestellte beispielhafte Ausführung der Vorrichtung 10 weist zwei Luftstromquellen 30, 31 zum Versorgen der Vorrichtung 10 mit einem konstanten Luftstrom und zwei von dem Luftstrom durchströmbare Führungskanäle 25, 26 zum Führen von Bauelementen 11 zu jeweils einer Zielposition 21, 22 auf. Ferner ist an der Vorrichtung 10 eine Bauelementzuführung 14 angeordnet, die zum Zuführen jeweils eines Bauelements 11 in eine Aufnahmekammer 15 dient. In der Aufnahmekammer 15 ist jeweils ein Bauelement 11 aufnehmbar und wahlweise an eine Aufnahmeposition 18 oder 19 eines der Führungskanäle 25, 26 bewegbar, an welcher das sich in der Aufnahmekammer 15 befindliche Bauelement 11 vom Luftstrom aufnehmbar und zur jeweiligen Zielposition 21, 22 führbar ist. Zur besseren Aufnahme des Bauelements 11 kann in der Aufnahmekammer 15 eine in Fig. 1a beispielhaft dargestellte Aufnahme- oder Positioniereinrichtung vorgesehen sein, welche so ausgebildet ist, dass diese insbesondere während der Zuführung des Bauelements 11 in den Führungskanal 25, 26 den konstanten Luftstrom im Führungskanal 25, 26 nicht oder nur unwesentlich beeinträchtigt. In gleicher Weise könnte das Bauelement 11 aber auch am Boden bzw. der unteren Wandung der Aufnahmekammer 15 abgelegt sein.

Wie in Verbindung mit den Darstellungen der Fig. 1a und 1b erkennbar ist, wird der Aufnahmekammer 15 ein Bauelement 11 von radial außen zugeführt. Die Aufnahmekammer 15 ist in einem in Fig. 1a schraffiert dargestellten Drehteller 12 der Vorrichtung 10 angeordnet. Durch eine Drehung des Drehtellers 12 kann die Aufnahmekammer 15 wahlweise an eine der Aufnahmepositionen 18, 19 bewegt werden, an welcher das Bauelement 11 vom Luftstrom aufnehmbar ist.

Im Drehteller 12 sind ferner zwei Segmentausnehmungen 12a, 12b angeordnet, welche sicherstellen, dass keine Unterbrechung oder wesentliche Beeinträchtigung des konstanten Luftstroms durch die Führungskanäle 25, 26 während der Drehung sowie an jeder der Positionen zur Aufnahme und Abgabe der Bauelemente 11 erfolgt. Der Drehteller 12 und damit auch die Aufnahmekammer 15 sind mittels der Antriebseinrichtung 36 rotatorisch bewegbar, insbesondere um jeweils einen vorbestimmten Winkel in oder gegen den Uhrzeigersinn drehbar.

Zur Versorgung der Führungskanäle 25, 26 mit einem konstanten Druckluftstrom ist die Vorrichtung 10 beispielsweise an ein Druckluftversorgungssystem als Luftstromquelle 30, 31 anschließbar. Alternativ kann die Versorgung der Führungskanäle 25, 26 mit einem konstanten Druckluftstrom mittels eines in der Vorrichtung 10 integrierten (nicht dargestellt) oder extern an diesen angeschlossenen Volumenstromerzeuger als Luftstromquelle erfolgen. Dabei kann jeder Führungskanal 25, 26 eine eigene Luftstromquelle 30, 31 aufweisen. Bei einer anderen Ausführung können die wenigstens zwei Führungskanäle 25, 26 auch eine gemeinsame Luftstromquelle 30 aufweisen.

In den Führungskanälen 25, 26 ist im Luftstrom nach der Aufnahmeposition 18, 19 jeweils ein Sensor 33 zum Erfassen eines vom Luftstrom weggeführten Bauelements 11 angeordnet. Mit einem Sensor 33 kann eine korrekte Aufnahme und/ oder Führung des Bauelements 11 durch den Luftstrom im Führungskanal 25, 26 erfasst werden. Der Sensor 33 ist dabei insbesondere mit einer Steuereinrichtung 38 der Vorrichtung 10 verbunden, so dass die von diesem ausgesendeten Sensorsignale zur Steuerung der Vorrichtung 10 verwendbar sind.

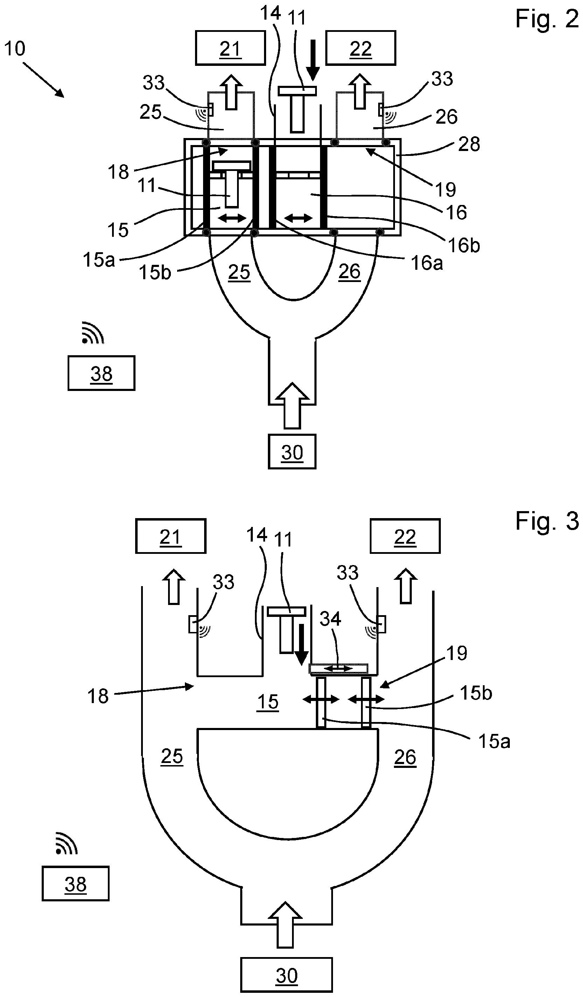

**Fig. 2** zeigt eine schematische Schnittdarstellung einer weiteren beispielhaften Vorrichtung 10 zum Führen von Bauelementen 11 zu wenigstens einer Zielposition 21, 22. Für gleiche bzw. gleichartige Bauteile werden in Fig. 2 übereinstimmende Bezugszeichen wie in den Figuren 1a, 1b verwendet.

Im Gegensatz zu der in Fig. 1 dargestellten Ausführung der Vorrichtung 10 weisen die beiden Führungskanäle 25, 26 der in Fig. 2 dargestellten beispielhaften Vorrichtung 10 nur eine Luftstromquelle 30 zum Versorgen der Führungskanäle 25, 26 mit einem konstanten Luftstrom zum Führen von Bauelementen 11 zu jeweils einer Zielposition 21, 22 auf. Auch die in Fig. 2 dargestellte Vorrichtung 10 weist eine Bauelementzuführung 14 auf, die zum Zuführen jeweils eines Bauelements 11 in eine von zwei Aufnahmekammern 15, 16 dient, welche translatorisch bewegbar sind, um ein darin aufgenommenes Bauelement an die jeweils eine Aufnahmeposition 18 oder 19 eines der Führungskanäle 25, 26 zu bewegen, an welcher das sich in der Aufnahmekammer befindliche Bauelemente 11 vom Luftstrom aufnehmbar und zur jeweiligen Zielposition 21, 22 führbar ist. Zur besseren Aufnahme des Bauelements 11 kann in der Aufnahmekammer 15 eine in Fig. 1a beispielhaft dargestellte Aufnahme- oder Positioniereinrichtung vorgesehen sein, welche so ausgebildet ist, dass diese insbesondere während der Zuführung des Bauelements in den Führungskanal 25, 26 den konstanten Luftstrom im Führungskanal 25, 26 nicht oder nur unwesentlich beeinträchtigt. In gleicher Weise könnte das Bauelement 11 aber auch am Boden bzw. der unteren Wandung der Aufnahmekammer 15 abgelegt sein.

Wie gezeigt wird der für diesen Zweck an der Bauelementzuführung 14 bereit gestellten Aufnahmekammer 15, 16 ein Bauelement 11 zugeführt. Dabei ist bereits vorbestimmt, zu welchem Führungskanal 25, 26 bzw. zu welcher Zielposition 21, 22 das aufzunehmende Bauelement 11 geführt werden soll. Die Aufnahmekammern 15, 16 sind linear verschieblich in einem Führungsgehäuse 28 angeordnet, welches jeweils die obere und untere Wandung der Aufnahmekammer bildet und abhängig von der Ausführung auch wenigstens eine hintere und/ oder vordere Wandung bildet. Die Aufnahmekammer 15, 16 wird folglich insbesondere von den beweglichen Wandungselementen 15a, 15b, 16a, 16b gebildet, welche sich zwischen einer Zuführposition an der Bauelementzuführung 14, an welcher der Aufnahmekammer 15, 16 ein Bauelement 11 zugeführt wird und einer Aufnahmeposition 18, 19 eines der Führungskanäle 25, 26 bewegen, in welcher das sich in der Aufnahmekammer 15, 16 befindende Bauelement 11 im Luftstrom des jeweiligen Führungskanals 25, 26 aufgenommen wird, und an die entsprechende Zielposition 21, 22 geführt wird. Folglich wird das Bauelement 11 durch die Bewegung des beweglichen Wandungselements 15a, 15b, 16a, 16b an eine Aufnahmeposition 18, 19 eines der Führungskanäle 25, 26 bewegt.

Die in Fig. 2 dargestellte Ausführung weist folglich zwei Aufnahmekammern 15, 16 auf, welche ein darin aufgenommenes Bauteil 11 zu einem vorbestimmten, der Aufnahmekammer 15, 16 zugeordneten Führungskanal 25, 26 und damit Zielposition 21, 22 führen. Damit ergibt sich im Falle der wiederholten Zuführung zu einer der beiden Zielpositionen ein Zeitverlust durch die erforderliche Rückführung der jeweiligen Aufnahmekammer 15, 16 im Vergleich zur möglichen Zuführung eines Bauelements 11 in die jeweils andere Aufnahmekammer, sobald die erste Aufnahmekammer die Position an der Bauelementzuführung 14 verlassen hat. Dadurch, dass die Aufnahmekammern 15, 16 so ausgebildet sind, dass sie keine den Luftstrom potenziell behindernde Wandungen aufweisen, wird eine Unterbrechung oder auch wesentliche Beeinträchtigung des konstanten Luftstroms durch die Führungskanäle 25, 26 während dem Bewegen der Bauelemente 11 an eine Aufnahmeposition 18, 19 eines der Führungskanäle vermieden. Die Aufnahmekammern 15, 16 sind insbesondere unabhängig voneinander mittels einer (nicht dargestellten) Antriebseinrichtung translatorisch bewegbar. Es versteht sich, dass das Führungsgehäuse 28 der Vorrichtung 10 auch weitere Führungskanäle aufweisen kann, in welche die Bauelemente 11 von der Bauelementzuführung 14 aus beispielsweise sternförmig bewegt werden können.

**Fig. 3** zeigt eine schematische Schnittdarstellung einer weiteren beispielhaften Vorrichtung 10 zum Führen von Bauelementen 11 zu wenigstens einer Zielposition 21, 22. Für gleiche bzw. gleichartige Bauteile werden in Fig. 3 übereinstimmende Bezugszeichen wie in den Figuren 1a, 1b und 2 verwendet.

Wie die in Fig. 2 dargestellte Vorrichtung weist die in Fig. 3 gezeigte Vorrichtung 10 eine gemeinsame Luftstromquelle 30 zum Versorgen der Führungskanäle 25, 26 mit einem konstanten Luftstrom zum Führen von Bauelementen 11 zu jeweils einer Zielposition 21, 22 auf. Ferner ist an der Vorrichtung 10 eine Bauelementzuführung 14 zum Zuführen jeweils eines Bauelements 11 in eine Aufnahmekammer 15 angeordnet. In der Aufnahmekammer 15 sind ferner zwei bewegliche Wandungselemente 15a und 15b angeordnet, welche wahlweise eine Wandung der Aufnahmekammer 15 bilden. Die Wandungselemente 15a und 15b sind mittels eines Antriebs (nicht dargestellt) translatorisch bewegbar, um ein in der Aufnahmekammer 15 aufgenommenes Bauelement 11 an die jeweils eine Aufnahmeposition 18 oder 19 eines der Führungskanäle 25, 26 zu bewegen, an welcher das Bauelement 11 aus der Aufnahmekammer 15 vom Luftstrom aufnehmbar und zur jeweiligen Zielposition 21, 22 führbar ist. Auch bei dieser Ausführung der Vorrichtung 10 sind die Wandungselemente 15a, 15b der Aufnahmekammer 15 so ausgebildet, dass sie den konstanten Luftstrom in den Führungskanälen 15, 16 und damit eine Zuführung der Bauelemente 11 zur Zielposition 21, 22 nicht beeinträchtigen. Auch diese Ausführung der Vorrichtung 10 kann weitere Führungskanäle aufweisen, in welche die Bauelemente 11 von der Bauelementzuführung 14 aus beispielsweise sternförmig bewegt werden können.

Wie der Darstellung entnehmbar ist, wird der Aufnahmekammer 15 mittels der Bauelementzuführung 14 ein Bauelement 11 zugeführt. Dabei sind die Wandungselemente 15a, 15b bereits entsprechend der vorgesehenen Zielposition 21, 22 des aufzunehmenden Bauelements 11 in der Aufnahmekammer 15 positioniert. Die Wandungselemente 15a, 15b sind linear verschieblich in der Aufnahmekammer 15 angeordnet. Die Aufnahmekammer 15 weist folglich bewegliche Wandungselemente 15a, 15b auf, welche sich zwischen einer Zuführposition, in welcher der Aufnahmekammer 15 über die Bauelementzuführung 14 ein Bauelement 11 zugeführt wird und einer Aufnahmeposition 18, 19 bewegen, in welcher das sich in der Aufnahmekammer 15, 16 befindende Bauelement 11 im Luftstrom des jeweiligen Führungskanals 25, 26 aufgenommen und an die entsprechende Zielposition 21, 22 geführt wird. Folglich wird das Bauelement 11 durch die Bewegung eines beweglichen Wandungselements 15a, 15b mechanisch an eine Aufnahmeposition 18, 19 eines der Führungskanäle 25, 26 bewegt. Zusätzlich weist die in Fig. 3 dargestellte Vorrichtung ein Sperrelement 34 auf, welches die Bauelementzuführung 14 während der Bewegung des Bauelements in der Aufnahmekammer 15 an eine Aufnahmeposition 18, 19 der Führungskanäle 25, 26 sperrt.

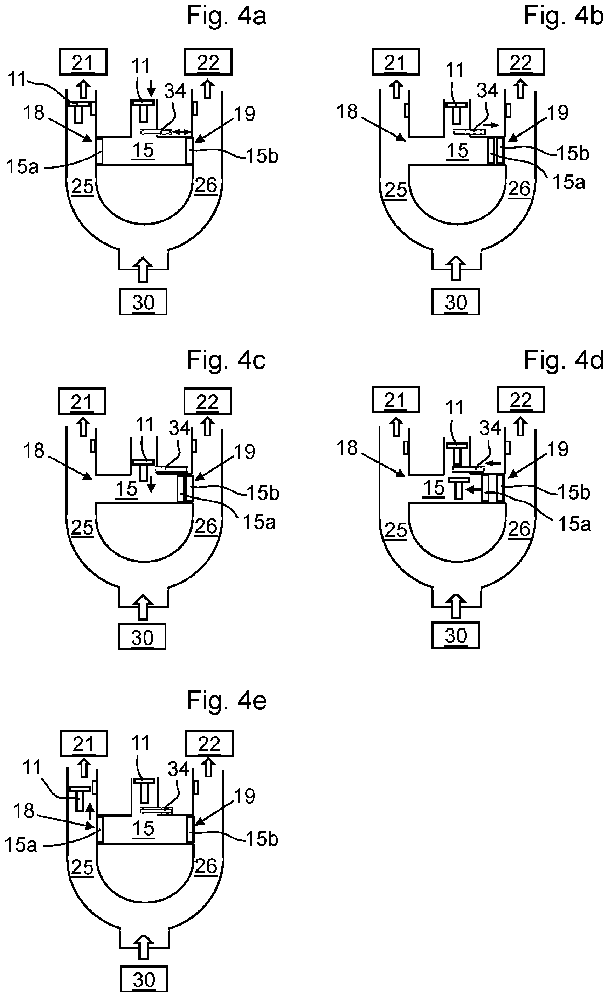

Die **Figuren 4a** bis **4e** zeigen schematische Schnittdarstellungen der beispielhaften Vorrichtung aus Fig. 3 zu verschiedenen Zeitpunkten im Ablauf des Verfahrens zum Führen von Bauelementen 11 zu wenigstens einer Zielposition 21, 22. Während des gesamten Verfahrensablaufs werden die beiden Führungskanäle 25, 26 von einem konstanten Luftstrom durchströmt, welcher zum Führen von Bauelementen 11 zu einer Zielposition 21, 22 geeignet ist. In Fig. 4a ist eine Situation gezeigt, in welcher gerade ein Bauelement 11 an der Aufnahmeposition 18 in den Führungskanal 25 aufgenommen wurde und mittels des Luftstroms zur Zielposition 21 geführt wird. Das Sperrelement 34 versperrt in dieser Situation die Bauelementzuführung 14. In Fig. 4b ist eine Situation gezeigt, in welcher das bewegliche Wandungselement 15a in eine Aufnahmestellung bewegt wurde, in welcher die Aufnahmekammer 15 bereit ist zur Aufnahme eines Bauelements 11, das an die Zielposition 21 geführt werden soll. Zum gezeigten Zeitpunkt ist die Bauelementzuführung 14 noch durch das Sperrelement 34 versperrt. Fig. 4c zeigt eine insbesondere hierauf folgende Situation, in welcher die Bauelementzuführung 14 durch eine Freigabe des Sperrelements 34 geöffnet ist, so dass das Bauelement 11 der Aufnahmekammer 15 zugeführt wird. Durch eine Bewegung des Wandungselements 15b wird daraufhin, wie in Fig. 4d dargestellt ist, das Bauelement 11 in der Aufnahmekammer 15 an die Aufnahmeposition 18 des Führungskanals 25 bewegt, an welcher es, wie in Fig. 4e dargestellt ist, im Luftstrom aufgenommen und zur Zielposition 21 geführt wird. Ein Führen eines Bauelements 11 zur Zielposition 22 erfolgt analog zu dem in den Figs. 4a bis 4e dargestellten Verfahrensablauf. Hierbei wird anstelle des beweglichen Wandungselements 15a das bewegliche Wandungselement 15b an eine Aufnahmestellung bewegt, in welcher vorgesehen ist, dass die Aufnahmekammer 15 ein Bauelement 11 aufnimmt, das zur Zielposition 22 geführt werden soll. Bei einer solchen Aufnahmestellung sind die beiden beweglichen Wandungselemente 15a, 15b an einer Position angeordnet, in welcher die Aufnahmekammer 15 zur Aufnahmeposition 19 des Führungskanals 26 hin geöffnet ist.

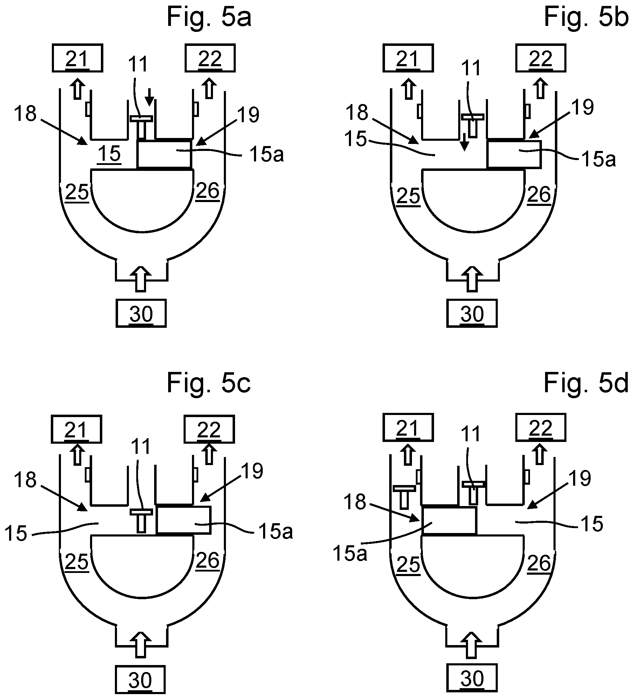

Die **Figuren 5a** bis **5d** zeigen schematische Schnittdarstellungen einer weiteren beispielhaften Vorrichtung 10 zu verschiedenen Zeitpunkten beim Führen von Bauelementen 11 zu einer Zielposition 21, 22. Die in den Figs. 5a bis 5d dargestellte Vorrichtung 10 ist im Wesentlichen wie die zu den Figs. 3 sowie 4a bis 4e beschriebene Vorrichtung 10 ausgeführt, weist im Gegensatz dazu allerdings nur ein einzelnes bewegliches Wandungselement 15a auf, welches ausgebildet ist, während der Bewegung des Bauelements 11 an wenigstens eine Aufnahmeposition 18, 19 eines der Führungskanäle 25, 26 die Bauelementzuführung 14 zum Zuführen eines Bauelements 11 in die Aufnahmekammer 15 zu sperren. In der in Fig. 5a dargestellten Situation versperrt das bewegliche Wandungselement 15a die Bauelementzuführung 14, so dass der Aufnahmekammer 15 kein Bauelement 11 zugeführt werden kann. In dem in Fig. 5b dargestellten Zeitpunkt wurde das bewegliche Wandungselement 15a von der Bauelementzuführung 14 zurückgezogen, sodass der Aufnahmekammer 15 ein Bauelement 11 zugeführt werden kann. Das bewegliche Wandungselement 15a ragt dabei zwar in den Führungskanal 26, allerdings nur so weit, dass der konstante Luftstrom durch diesen nicht wesentlich beeinträchtigt oder unterbrochen wird. Nach der in Fig. 5c dargestellten Aufnahme des Bauelements 11 in der Aufnahmekammer wird das bewegliche Wandungselement 15a zusammen mit dem Bauelement 11 translatorisch in Richtung der Aufnahmeposition 18 bewegt, wo das Bauelement 11, wie in Fig. 5d gezeigt ist, vom Luftstrom im Führungskanal 25 aufgenommen und zur Zielposition 21 geführt wird. Bereits während der Bewegung zur Aufnahmeposition 18 versperrt das bewegliche Wandungselement 15a die Bauelementzuführung 14 zum Zuführen eines Bauelements in die Aufnahmekammer 15.

### Bezugszeichenliste

- 10: Vorrichtung
- 11: Bauteil
- 12: Drehteller
- 12a, b: Segmentausnehmung
- 14: Bauelementzuführung
- 15: Aufnahmekammer
- 15a, b: bewegliche Wandung der Aufnahmekammer
- 16: Aufnahmekammer
- 16a, b: bewegliche Wandung der Aufnahmekammer
- 18: Aufnahmeposition
- 19: Aufnahmeposition
- 21: Zielposition
- 22: Zielposition
- 25: Führungskanal
- 26: Führungskanal
- 28: Führungsgehäuse
- 30: Luftstromquelle
- 31: Luftstromquelle
- 33: Sensor
- 34: Sperrelement
- 36: Antriebseinrichtung
- 38: Steuereinrichtung

## Patentansprüche

1. Verfahren zum Führen von Bauelementen (11), insbesondere Fügeelementen zu wenigstens einer Zielposition (21, 22) mit folgenden Schritten:
a) Durchströmen von wenigstens zwei Führungskanälen (25, 26) mit einem konstanten Luftstrom zum Führen von Bauelementen (11) mit dem konstanten Luftstrom zu der wenigstens einen Zielposition (21, 22);
b) Zuführen eines Bauelements (11) zu einer Aufnahmekammer (15, 16); und
c) Bewegen des Bauelements (11) in der Aufnahmekammer (15, 16) an eine Aufnahmeposition (18, 19) eines der Führungskanäle (25, 26), an welcher der Luftstrom das Bauelement (11) aufnimmt und zu der wenigstens einen Zielposition (21, 22) führt.

2. Verfahren nach Anspruch 1, **gekennzeichnet durch** den weiteren Schritt:
d) Erfassen einer korrekten Aufnahme des Bauelements (11) im Luftstrom des Führungskanals (25, 26).

3. Verfahren nach Anspruch 2, **dadurch gekennzeichnet, dass** nach dem Erfassen einer korrekten Aufnahme des Bauelements (11) im Luftstrom des Führungskanals (25, 26) im Schritt d) ein weiteres Bauelement (11) gemäß Schritt b) der Aufnahmekammer (15, 16) zugeführt wird.

4. Verfahren nach wenigstens einem der vorhergehenden Ansprüche, **dadurch gekennzeichnet, dass** die Aufnahmekammer (15, 16) beim Bewegen des Bauelements (11) an eine Aufnahmeposition (18, 19) eines der Führungskanäle (25, 26) im Schritt c) gegenüber einer Bauelementzuführung (14) versperrt wird.

5. Verfahren nach wenigstens einem der vorhergehenden Ansprüche, **dadurch gekennzeichnet, dass** der konstante Luftstrom von wenigstens zwei Luftstromquellen (30, 31) erzeugt wird und der von einer Luftstromquelle (30, 31) erzeugte Luftstrom jeweils wenigstens einen Führungskanal (25, 26) durchströmt und/ oder dass der konstante Luftstrom von einer Luftstromquelle (30) einheitlich erzeugt und auf wenigstens zwei Führungskanäle (26, 26) aufgeteilt wird.

6. Verfahren nach wenigstens einem der vorhergehenden Ansprüche, **dadurch gekennzeichnet, dass** die Aufnahmekammer (15, 16) während dem Zuführen eines Bauelements (11) im Schritt b) gegenüber wenigstens einem Führungskanal (25, 26) versperrt wird.

7. Verfahren nach wenigstens einem der vorhergehenden Ansprüche, **dadurch gekennzeichnet, dass** das Zuführen eines Bauelements (11) zu einer vorbestimmten Aufnahmekammer (15, 16) und/ oder das Bewegen des Bauelements (11) insbesondere in einer Aufnahmekammer (15, 16) an eine Aufnahmeposition (18, 19) eines der Führungskanäle (26, 26) gesteuert.

8. Vorrichtung zum Führen von Bauelementen (11), insbesondere Fügeelementen zu wenigstens einer Zielposition (21, 22) aufweisend:
- wenigstens eine Luftstromquelle (30, 31) zum Versorgen der Vorrichtung (10) mit einem konstanten Luftstrom;
- wenigstens zwei von dem Luftstrom durchströmbare Führungskanäle (25, 26) zum Führen von Bauelementen (11) zu der wenigstens einen Zielposition (21, 22);
- eine Bauelementzuführung (14) zum Zuführen jeweils eines Bauelements (11) in eine Aufnahmekammer (15, 16); und
- die wenigstens eine Aufnahmekammer (15, 16), in welcher die Bauelemente (11) aufnehmbar sind und an eine Aufnahmeposition (18, 19) eines der Führungskanäle (25, 26) bewegbar sind, an welcher die Bauelemente (11) vom Luftstrom aufnehmbar und zur jeweiligen Zielposition (21, 22) führbar sind.

9. Vorrichtung zum Führen von Bauelementen nach Anspruch 8, **dadurch gekennzeichnet, dass** die Vorrichtung (10) an ein Druckluftversorgungssystem als Luftstromquelle (30, 31) anschließbar ist und/ oder wenigstens einen Volumenstromerzeuger als Luftstromquelle (30, 31) aufweist.

10. Vorrichtung zum Führen von Bauelementen nach wenigstens einem der Ansprüche 8 oder 9, **dadurch gekennzeichnet, dass** jeder Führungskanal (25, 26) eine eigene Luftstromquelle (30, 31) aufweist oder wenigstens zwei Führungskanäle (25, 26) eine gemeinsame Luftstromquelle (30, 31) aufweisen.

11. Vorrichtung zum Führen von Bauelementen nach wenigstens einem der Ansprüche 8 bis 10, **dadurch gekennzeichnet, dass** in den wenigstens zwei Führungskanälen (25, 26) im Luftstrom nach der Aufnahmeposition (18, 19) jeweils ein Sensor (33) zum Erfassen eines vom Luftstrom weggeführten Bauelements (11) angeordnet ist.

12. Vorrichtung zum Führen von Bauelementen nach wenigstens einem der Ansprüche 8 bis 11, **dadurch gekennzeichnet, dass** wenigstens eine Wandung der Aufnahmekammer (15, 16) von einem beweglichen Wandungselement (15a, 15b, 16a, 16b) gebildet wird, durch dessen Bewegung das Bauelement (11) an wenigstens eine Aufnahmeposition (18, 19) eines der Führungskanäle (25, 26) bewegbar ist.

13. Vorrichtung zum Führen von Bauelementen nach wenigstens einem der vorhergehenden Ansprüche, **dadurch gekennzeichnet, dass** diese ein Sperrelement (34) zum Versperren der Aufnahmekammer (15) gegenüber der Bauelementzuführung (14) aufweist oder das wenigstens eine bewegliche Wandungselement (15a, 15b, 16a, 16b) ausgebildet ist, während der Bewegung des Bauelements (11) an wenigstens eine Aufnahmeposition (18, 19) eines der Führungskanäle (25, 26) die Bauelementzuführung (14) zum Zuführen jeweils eines Bauelements (11) in die Aufnahmekammer (15, 16) zu sperren.

14. Vorrichtung zum Führen von Bauelementen nach wenigstens einem der Ansprüche 12 oder 13, **dadurch gekennzeichnet, dass** das wenigstens eine bewegliche Wandungselement (15a, 15b, 16a, 16b) insbesondere mithilfe einer Antriebseinrichtung (36) rotatorisch oder translatorisch bewegbar ist.

15. Vorrichtung zum Führen von Bauelementen wenigstens einem der Ansprüche 8 bis 14, **dadurch gekennzeichnet, dass** diese eine Steuereinrichtung (38) aufweist oder mit einer solchen verbunden ist.
